**Europäisches Patentamt**

(19) **European Patent Office**

**Office européen des brevets**

(11) Numéro de publication: **0 142 212**
**B1**

# FASCICULE DE BREVET EUROPÉEN

(45) Date de publication du fascicule du brevet:
15.02.89

(51) Int. Cl.⁴: **A 47 J 37/12,** A 47 J 27/62

(21) Numéro de dépôt: **84201636.2**

(22) Date de dépôt: **13.11.84**

(54) **Friteuse.**

(30) Priorité: **16.11.83 CH 6147/83**

(43) Date de publication de la demande:
**22.05.85 Bulletin 85/21**

(45) Mention de la délivrance du brevet:
**15.02.89 Bulletin 89/7**

(84) Etats contractants désignés:
**AT BE DE FR GB IT NL SE**

(56) Documents cité:
**US-A-2 756 321**
**US-A-3 217 633**
**US-A-3 894 483**

(73) Titulaire: **Wenger, Frédy, Chemin de l'Ormet, 17A,
CH- 1024 Ecublens (CH)**

(72) Inventeur: **Wenger, Frédy, Chemin de l'Ormet,
17A, CH- 1024 Ecublens (CH)**

(74) Mandataire: **Meylan, Robert Maurice, c/o
BUGNION S.A. 10, route de Florissant Case
Postale 375, CH- 1211 Genève 12 - Champel (CH)**

LIBER, STOCKHOLM 1989

## Description

La présente invention a pour objet une friteuse, comprenant une cuve à huile, un corps de chauffe contrôlé par un thermostat, un panier immergeable et des moyens d'entraînement du panier pour sa descente et sa remontée, moyens contrôlés par une minuterie comprenant un commutateur à deux positions "descente" et "montée" et des moynes pour limiter la chute de température d'huile due au temps de réponse du thermostat, lors de l'immersion du panier. Un tel dispositif est décrit dans le US-A-3 271 633.

Les différents aliments pouvant être frits dans de telles friteuses doivent être frits à des température adéquates qui différent d'un aliment à l'autre. L'opérateur choisit sur l'échelle du thermostat la température adéquate et ce thermostat est chargé de maintenir l'huile à cette température en déclenchant le corps de chauffe lorsque la tempéraure adéquate est atteinte. Une lampe de signalisation, branchée en parallèle avec le corps de chauffe, parmet à l'utilisateur de savoir à quel moment la température désirée est atteinte. Dès que cette lampe s'éteint, l'utilisateur met en route la minuterie qui provoque la descente et l'immersion du panier et contrôle ce temps d'immersion.

Actuellement, on utilise de plus en plus des aliments congelès, tels que pommes frites, croquettes, poissons, cuisses de poulets, etc. Ces derniers sont immergés dans l'huile chaude à l'état congelé, c'est-à-dire à une température de moins 17° à moins 25°C environ. Cette immersion provoque une brusque et forte chute de la température de l'huile, chute d'autant plus forte que le temps de réaction des thermostats capillaires utilisés dans la presque totalité des friteuses est de l'ordre de 30 à 40 secondes. Pour maintenir cette chute de température dans des limites acceptables, on a eu recours à deux solutions. La première consiste à augmenter la puissance du corps de chauffe, par exemple jusqu'à une puissance de 10 kW. Une telle puissance entraîne toutefois des surchages sur le réseau qui ne sont guère appréciées par les distributeurs. L'autre solution consiste à utiliser un thermostat électronique très sensible ayant un temps de réaction très court, ce qui permet par conséquent de limiter la chute de température. Ces thermostats électroniques sont toutefois très coûteux et délicats,

La présente invention a pour but de limiter la chute de température lors de l'immersion de mets congelés, par des moyens simples et peu coûteux.

La friteuse selon l'invention est caractérisé par par le fait que les moyens pour limiter la chute de température sont constitués, d'une part, par un second commutateur de minuterie en série avec le corps de chauffe et en parallèle avec un premier interrupteur commandé par le thermostat de telle manière qu'il ferme le circuit du corps de chauffe lorsque le premier commutateur est dans sa position "descente" et, d'autre part par un second interrupteur en série avec le second commutateur de la minuterie et avec le corps de chauffe et commandé par un thermostat réglé de telle sorte que ce second interrupteur s'ouvre à une température supérieure à la température d'ouverture du premier interrupteur.

Dès qu'on actionne la minuterie, non seulement le panier se met à descendre, mais tout ou partie de la puissance du corps de chauffe est enclenchée et l'huile chauffe déjà pendant la descente du panier qui prend environ 15 secondes. On neutralise ainsi l'inertie du corps de chauffe et on diminue la chute de température de l'huile provoquée par l'immersion des aliments surgelés. L'interrupteur du thermostat chargé de réguler la température de l'huile étant court-circuité par le deuxième commutateur de la minuterie, il convient d'éviter une surchauffe de l'huile au cas où la minuterie serait enclenchée sans aliments dans le panier. Une telle surchauffe est toutefois empêchée par le deuxième interrupteur du thermostat qui coupe le circuit d'alimentation du corps de chauffe dès que la température a dépassé la température prescrite d'environ 5 à 7°C.

Le dessin annexé représente, à titre d'exemple, deux formes d'exécution de l'invention.

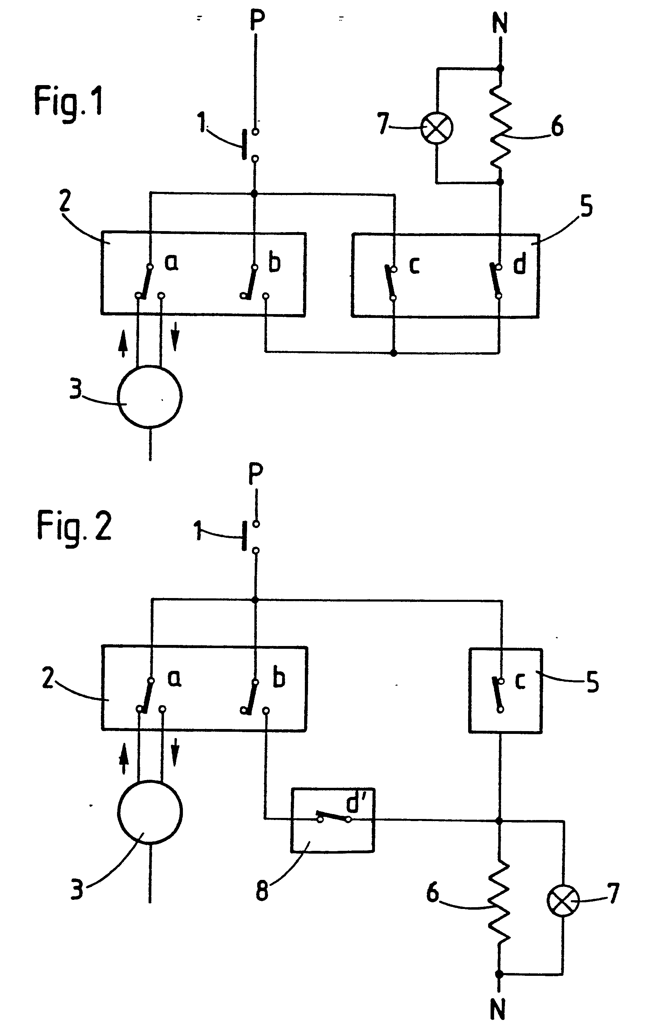

La figure 1 du dessin représente le schéma électrique d'une friteuse munie d'un corps de chauffe électrique, selon une première forme d'exécution. La figure 2 représente le schéma d'une seconde forme d'exécution. P et N désignent respectivement une phase et le neutre d'un réseau d'alimentation en courant alternatif.

La friteuse comprend un interrupteur principal 1 commandant l'alimentation d'un dispositif de descente et de montée 3 et d'un corps de chauffe 6 à travers une minuterie 2 et respectivement un thermostat 5.

La minuterie 2 comprend un premier commutateur bi-polaire a en position "montée" lorsque la minuterie est au repos et un second commutateur bi-polaire b en position "ouvert" lorsque la minuterie est en position de repos (ou de montée). Le thermostat de travail 5 comprend un premier interrupteur c réglé pour s'ouvrir à une température prescrite, par exemple 195°C, comme dans l'art antérieur. Cet interrupteur c est en parallèle avec le commutateur b. Le thermostat 5 comprend un deuxième interrupteur d commandé par la même mécanique que l'interrupteur c, mais réglé pour s'ouvrir à une température supérieure de 5 à 7°C à la température d'ouverture de l'interrupteur c. Cet interrupteur d est en série avec l'interrupteur c et avec le commutateur bi-polaire b. Les interrupteurs c et d étant actionnés par le même mécanisme, le réglage du thermostat à la température prescrite, à l'intérieur de la plage de réglage, entraîne automatiquement simultanément le réglage du point de fonctionnement du second interrupteur d, avec une précision tout-à-fait suffisante.

Le fonctionnement est le suivant dès que la lampe de signalisation 7, en parallèle avec le corps de chauffe 6, s'éteint, cela signifie que l'interrupteur c s'est ouvert et que la température prescrite est atteinte. A ce moment là, l'utilisateur actionne la minuterie 2 le commutateur a commute sur la position "descente" du panier et le commutateur b ferme le cirucit d'alimentation du corps de chauffe 6 à travers l'interrupteur d, pour autant bien entendu que celui-ci soit fermé. Le corps de chauffe 6 se met donc à chauffer dès que le panier se met à descendre. Il chauffe déjà donc lorsque les aliments, en particulier les aliments surgelés, commencent à être immergés dans l'huile en entraînant une chute de la température de cette huile, sans attendre que l'interrupteur c se referme, ce qui peut prendre 30 à 40 secondes compte tenu de son inertie propre et de l'inertie de la masse du corps de chauffe. Cette inertie est par conséquent neutralisée par le commutateur b et la chute de température est freinée. Le commutateur b reste fermé aussi longtemps que le panier est immergé, généralement 60 secondes pour des pommes frites surgelées. Entre-temps, l'interrupteur c du thermostat se referme, prenant ainsi le relais du commutateur b lorsque la minuterie commute en position de remontée. Le corps de chauffe 6 est par conséquent enclenché de façon continue pendant cette première phase de cuisson, sauf si la température de l'huile dépasse la valeur de sécurité entraînant l'ouverture de l'interrupteur d, ce qui ne se produit normalement que si la minuterie est mise en marche avec un panier vide.

La deuxième phase de cuisson consiste à replonger les frites dégelées durant une minute après que la température de l'huile ait atteint la température prescrite, état signalé par l'extinction de la lampe 7. La minuterie est alors à nouveau enclenchée et le processus décrit ci-dessus se répète.

Les moyens décrits ci-dessus peuvent utilisés en combinaison avec des moyens de signalisation anticipant l'instant où la température de l'huile atteint la valeur prescrite (ouverture de l'interrupteur c) tels que décrits dans la demande de brevet parallèle CH No 6' 148/83-0. Dans ce cas la minuterie est enclenchée au moment où apparaît ce premier signal, c'est-à-dire avant que la température ait atteint sa valeur prescrite. L'anticipation étant d'environ 15 secondes et le panier mettant environ 5 secondes jusqu'à ce que les premiers aliments soient immergés, la température continue de monter pour amorcer sa descente à une valeur comprise entre la valeur d'anticipation et la valeur prescrite (valeur de fonctionnement du contact c du thermostat). Si la minuterie est enclenchée tardivement après le signal d'anticipation, où si la minuterie est enclenchée avec un panier vide, la température de l'huile continue à monter, mais l'interrupteur d coupe l'alimentation du corps de chauffe si cette température dépasse la température prescrite de 5 à 7°C. Dans les autres cas, le corps de chauffe reste constamment enclenché. La combinaison des deux moyens permet de gagner du temps et de cuire les aliments à une température inférieure à la température prescrite, ce qui améliore la qualité des mets frits.

Dans la seconde forme d'exécution représentée à la figure 2, qui est en fait une simple variante de la première, le contact d du thermostat 5 est remplacé par le contact d' d'un second thermostat 8 en parallèle avec le contact b de la minuterie et avec le contact c du thermostat principal. Comme précédemment le contact d', fermé au repos, s'ouvre à une température d'environ 5 à 7°C supérieure à la température de travail de l'interrupteur c.

## Revendications

1. Friteuse comprenant une cuve à huile, un corps de chauffe contrôlé par un thermostat (5), un panier immergeable, des moyens d'entraînement (3) du panier pour sa descente et sa remontée, moyens contrôlés par une minuterie (2) comprenant un commutateur (a) à deux positions "descente" et "montée" et des moyens pour limiter la chute de température de l'huile due au temps de réponse du thermostat, lors de l'immersion du panier, caractérisée par le fait que les moyens pour limiter la chute de température sont constitués, d'une part, par un second commutateur (b) de minuterie en série avec le corps de chauffe (6) et en parallèle avec un premier interrupteur (c) commandé par le thermostat de telle manière qu'il ferme le circuit du corps de chauffe lorsque le premier commutateur (a) est dans sa position "descente" et, d'autre part par un second interrupteur (d) en série avec le second commutateur (b) de la minuterie et avec le corps de chauffe et commandé par un thermostat réglé de telle sorte que ce second interrupteur (d) s'ouvre à une température supérieure à la température d'ouverture du premier interrupteur (c).

2. Friteuse selon la revendication 1, caractérisée par le fait que les premier et second interrupteurs (c, d) sont en série et commandés par un seul et même thermostat, le second interrupteur (d) réglé de manière à s'ouvrir à une température d'environ 5 à 7°C supérieure à la température de travail du premier interrupteur (c).

3. Friteuse selon la revendication 1 caractérisée par le fait que le second interrupteur (d) est en parallèle au premier interrupteur (c) et commandé par un second thermostat.

## Patentansprüche

1. Friteuse mit einer Ölvanne, einem durch einen Thermostaten (5) gesteuerten Heizelement, einem eintauchbaren Korb, einer Antriebsvorrichtung (3) für den Korb, um ihn abzusenken und anzuheben, einer durch ein Zeitschaltwerk (2) gesteuerten Einrichtung mit einem Zweistellungsschalter (a) für "Absenken" und "Anheben" sowie einer Einrichtung zum Begrenzen des Abfalls der Öltemperatur infolge der Ansprechzeit des Thermostaten bei eingetauchtem Korb, dadurch gekennzeichnet, dass die Einrichtung zum Begrenzen des Temperaturabfalls einerseits aus einem zweiten Schalter (b) des Zeitschaltwerks, welcher in Reihe mit dem Heizelement (6) und Parallel mit einem ersten durch den Thermostaten gesteuerten Unterbrecher (C) liegt, derart, dass er den Stromkreis des Heizelements schliesst, wenn der erste Schalter (a) seine Stellung "Absenken" einnimmt, und andererseits aus einem zweiten Unterbrecher (d) besteht, der in Reihe mit dem zweiten Schalter (b) des Zeitschaltwerks und mit dem Heizkörper angeordnet ist und durch einen geregelten Thermostaten gesteuert wird, derart, dass dieser zweite Unterbrecher (d) bei einer Temperatur geöffnet wird, die über der Öffnungstemperatur des ersten Unterbrechers (c) liegt.

2. Friteuse nach Anspruch 1, dadurch gekennzeichnet, dass der erste und der zweite Unterbrecher (c, d) in Reihe geschaltet sind und von ein und demselben Thermostaten gesteuert werden, wobei der zweite Unterbrecher (d) derart gesteuert wird, dass er sich bei einer Temperatur von ungefähr 5 bis 7°C oberhalb der Arbeitstemperatur des ersten Unterbrecher (c) öffnet.

3. Friteuse nach Anspruch 1, dadurch gekennzeichnet, dass der zweite Unterbrecher (d) parallel zum ersten Unterbrecher (c) geschaltet ist und durch einen zweiten Thermostaten gesteuert wird.

## Claims

1. Deep fryer comprising an oil vessel, a heating body controled by a thermostat (5), an immersible basket, means (3) for driving the basket up and down, means controlled by a timer (2) comprising a two-position "down" and "up" switch (a), and means for restricting the drop in temperature of the oil due to the response time of the thermostat when immersing the basket, characterized by the fact that the means for restricting the drop in temperature consist, on the one hand, of a second timer switch (b) in series with the heating body (6) and in parallel with a first switch (c) controlled by the thermostat such that it switches on the circuit of the heating body when the first switch (a) is in its "down" position and, on the other hand, of a second switch (d) in series with the second timer switch (b) and with the heating body and controlled by a thermostat regulated such that this second switch (d) is switched off at a temperature above the working temperature of the first switch (c).

2. Deep fryer according to claim 1, characterized by the fact that the first and second switches (c, d) are in series and controlled by one and the same thermostat, the second switch (d) regulated so as to be switched off at a temperature of approximately 5 to 7°C above the working temperature of the first switch (c).

3. Deep fryer according to claim 1, characterized by the fact that the second switch (d) is in parallel with the first switch (c) and controlled by a second thermostat.

Fig. 1

Fig. 2